# EUROPÄISCHE PATENTANMELDUNG

(11) **EP 3 578 868 A1**
(43) Veröffentlichungstag der Anmeldung: **11.12.2019**
(21) Anmeldenummer: 19173872.3
(22) Anmeldetag: 10.05.2019
(51) Int. Cl.: F16P 3/14

(54) **SENSORSYSTEM MIT OPTOELEKTRONISCHEN DISTANZSENSORMODULEN**

(30) Priorität: 05.06.2018 DE 102018113362
(71) Anmelder: Sick AG, 79183 Waldkirch (DE)
(72) Erfinder: Steinkemper, Heiko, 79183 Waldkirch (DE); Sigmund, Jörg, 79341 Kenzingen (DE); Hofmann, Christoph, 79183 Waldkirch (DE)

(57) **Zusammenfassung**

Sensorsystem (1) mit optoelektronischen Distanzsensormodulen (2) zur Überwachung eines Gefahrenbereichs (3) an einem bewegbaren Maschinenteil (4) mit mindestens einem Schutzbereich (5), wobei an dem bewegbaren Maschinenteil (4) ein Werkzeug und/oder ein Werkstück (6) angeordnet ist, wobei die optischen Distanzsensormodule (2) auf mindestens einer Leiterplatte (7) an dem bewegbaren Maschinenteil (4) angeordnet sind, wobei eine Vielzahl von Distanzsensormodulen (2) angeordnet ist, wobei die optischen Achsen (8) der Detektionsstrahlen (9) der Distanzsensormodule (2) ein räumliches Schutzfeld (10) bilden.

## Beschreibung

Die vorliegende Erfindung betrifft ein Sensorsystem mit optoelektronischen Distanzsensormodulen zur Überwachung eines Gefahrenbereichs an einem bewegbaren Maschinenteil.

Die DE 10 2015 112 656 A1 offenbart eine Vielzahl von optoelektronischen Distanzsensoren an einem bewegbaren Maschinenteil.

Eine Aufgabe der Erfindung besteht darin, ein kostengünstiges, integriertes und verbessertes Sensorsystem für einen Schutzbereich an einem Roboterarm bereitzustellen.

Die Aufgabe wird gemäß Anspruch 1 gelöst durch ein Sensorsystem mit optoelektronischen Distanzsensormodulen zur Überwachung eines Gefahrenbereichs an einem bewegbaren Maschinenteil mit mindestens einem Schutzbereich, wobei an dem bewegbaren Maschinenteil ein Werkzeug und/oder ein Werkstück angeordnet ist, wobei die optoelektronischen Distanzsensormodule auf mindestens einer Leiterplatte an dem bewegbaren Maschinenteil angeordnet sind, wobei eine Vielzahl von Distanzsensormodulen angeordnet ist, wobei die optischen Achsen der Detektionsstrahlen der Distanzsensormodule ein räumliches Schutzfeld bilden.

Das Sensorsystem dient zum sicheren Überwachen des Gefahrenbereich bzw. eines Überwachungsbereichs des bewegbaren Maschinenteils.

Sicherheit ist gemäß vorliegender Erfindung Sicherheit im Sinne von Maschinensicherheit. Beispielsweise regelt die Norm EN/IEC 61496 die Anforderungen an einen sicheren Sensor bzw. eine sichere berührungslos wirkende Schutzeinrichtung (BWS) zur Absicherung von Gefahrenbereichen. Maschinensicherheit ist in der Norm EN13849 geregelt.

Die Distanzsensormodule sind entlang der Leiterplatte beabstandet zueinander angeordnet, wobei die Sensoren zunächst ein flächiges Schutzfeld bilden.

Optional weisen die Distanzsensormodule gleichmäßige Abstände auf der Leiterplatte auf. Durch die gleichmäßigen Abstände der Sensoren und eine jeweils identische Winkelausrichtung der Detektionsstrahlen wird eine gleichmäßige Auflösung innerhalb des Schutzfeldes erreicht.

Beispielsweise sind die Distanzsensormodule Lichtlaufzeitsensoren. Ein Lichtlaufzeitsensor bzw. ein Distanzsensormodul bzw. ein Lichttaster nach dem Lichtlaufzeitprinzip weist mindestens einen Lichtsender auf, der aufeinanderfolgende Lichtimpulse in einen Messbereich bzw. Überwachungsbereich aussendet und mindestens einen Lichtempfänger, welcher die an einem Objekt im Messbereich zurückgeworfenen Lichtimpulse aufnimmt und in Form von elektrischen Empfangssignalen einer Steuer- und Auswerteeinheit zuführt, die unter Berücksichtigung der Lichtgeschwindigkeit aus der Zeit zwischen Aussendung und Empfang des Lichtimpulses ein für den Abstand des Objektes zum Lichttaster repräsentatives Abstandssignal ermittelt.

Zur Erzeugung eines quasi geschlossenen Schutzmantels bzw. räumlichen Schutzfeldes aus den Distanzsensormodulen ist eine verschiedene Anzahl der Distanzsensormodule vorgesehen: Es kann beispielsweise die Sensoranzahl angepasst werden an die Erfordernisse einer bestimmten Anwendung. Je mehr Distanzsensormodule angeordnet werden, desto dichter liegen die optischen Achsen der Distanzsensoren nebeneinander, wodurch das Schutzfeld eine höhere Auflösung aufweist.

Die Wellenlänge des ausgesendeten Lichts der Distanzsensoren ist vorzugsweise eine für das menschliche Auge unsichtbare Wellenlänge, beispielsweise Infrarotlicht. Dadurch wird ein gezieltes Eingreifen in mögliche Schutzlücken erschwert, da diese nicht sichtbar sind.

Optional sind vor den Distanzsensormodulen noch Optikmodule angeordnet. Jedoch können die Optikmodule auch in den Distanzsensormodulen integriert sein.

Die Distanzsensormodule sind aufgrund ihrer hohen Integration sowie Stückzahl sehr kostengünstig, weshalb eine Vielzahl davon angeordnet werden kann. Die Distanzsensormodule und die zugehörigen Optikmodule können automatisiert auf der Leiterplatte bestückt werden und sehr genau positioniert bzw. ausgerichtet werden.

Durch die hohe Anzahl an Sensormodulen kann eine entsprechend hohe räumliche Auflösung erreicht werden. Hierdurch können auch eine Vielzahl von Schutzfeldern und eine Vielzahl von Schutzebenen angeordnet werden. Zudem werden Lücken oder Totbereiche zwischen den Distanzsensormodulen klein gehalten.

In Weiterbildung der Erfindung bilden die optischen Achsen der Detektionsstrahlen der Distanzsensormodule ein zylindrisches, kubisches, rechteckiges, kegelstumpfförmiges oder pyramidenstumpfförmiges Schutzfeld.

Das zylindrische Schutzfeld kann beispielsweise ein Kreiszylinder oder ein Ringzylinder sein.

In Weiterbildung der Erfindung sind vor den Distanzsensormodule Vorsatzoptiken angeordnet. Die Vorsatzoptiken erlauben eine Strahlformung der Detektionsstrahlen bzw. Detektionsbereiche hin zu Linien, Kegeln oder kollimierten Strahlen. Die Vorsatzoptiken dienen auch zum Optimieren der Energiebilanz. Beispielsweise können die Strahlen nach außen geneigt sein.

In Weiterbildung ist auf der Leiterplatte die Steuer- und Auswerteeinheit angeordnet.

Die Sicherheit wird beispielsweise durch einen einkanaligen Aufbau der Steuer- und Auswerteeinheit mit Testung, durch einen zweikanaligen oder zweikanalig diversitären Aufbau der Steuer- und Auswerteeinheit zur Fehleraufdeckung und zur Funktionsprüfung gewährleistet. Das Sensorsystem gemäß vorliegender Erfindung ist beispielsweise eigensicher ausgebildet und erkennt interne Fehler. Bei Entdeckung eines Fehlers wird beispielsweise ein Fehlersignal generiert. Weiter verfügt das Sensorsystem optional über eine Sensortestung.

Die Auswerteeinheit erkennt Schutzfeldverletzungen und kann ein sicherheitsgerichtetes Abschaltsignal ausgeben, um eine gefahrbringende Bewegung des Teils zu stoppen bzw. das Teil abzubremsen. Das kann z. B. über sichere Schaltsignale, z.B. OSSD-Signale (Output Safety Switching Device-Signale) oder sichere Distanzdaten, Abstandsdaten bzw. sichere Ortsdaten des Eingriffsereignisses realisiert werden. Beispielsweise ist die Steuer- und Auswerteeinheit zweikanalig ausgebildet.

Die mehreren Distanzsensormodule sind mit der Steuer- und Auswerteeinheit zur Auswertung der Distanzsensormodule verbunden.

Die Steuer- und Auswerteeinheit kann als System-on-Chip (SoC) wie beispielsweise ein Zynq von Xilinx, welcher ein FPGA, einen leistungsfähigen Mehrkernprozessor sowie eine große Anzahl an Peripherieschnittstellen auf dem Chip vereint, ausgebildet sein. Alternativ kann hier auch ein leistungsfähiger Mikrocontroller eingesetzt werden.

An diese Steuer- und Auswerteeinheit sind alle Distanzsensormodule bzw. Sensorchips direkt auf der Platine angeschlossen und werden von dieser parametriert, angesteuert und ausgelesen.

Die Steuer- und Auswerteeinheit ist wiederum über eine einzige Schnittstelle mit einer Robotersteuerung bzw. der übergeordneten Prozesssteuerung oder dem Netzwerk der Gesamtproduktion verbunden. Die Schnittstelle kann hierbei z. B. eine Feldbus- oder Funkverbindung sein. Im Falle einer Kabelverbindung kann hier ein hochflexibles Kabel verwendet werden, das sich besonders gut mit den beweglichen Gliedmaßen des Roboters kombiniert. Über diese Schnittstelle können schließlich alle Daten der angeschlossenen Sensoren auf der Platine abgerufen werden, sowie das Gesamtsystem mit dem Sensorsystem von außen parametriert werden.

Die Steuer- und Auswerteeinheit kann auch an die Positionsdaten der Robotersteuerung angebunden werden, um einen entsprechenden Abgleich mit den Positionsdaten durchzuführen.

Die Steuer- und Auswerteeinheit kann zusätzliche Schnittstellen aufweisen, z.B. IO-Link, um weitere Sensoren zu Automatisierungszwecken in die Applikation einzubinden. Die Steuer- und Auswerteeinheit dient hierbei auch als allgemeiner Sensorhub.

In Weiterbildung ist auf der Leiterplatte ein Kameramodul angeordnet. Das Kameramodul ist nur optional und wird für die primäre Sicherheitsfunktion nicht benötigt. Das optional integrierte Kameramodul kann auch einfachere Vision-Anwendungen als Automatisierungsfunktion, wie beispielsweise Teile finden oder Roboter Guidance ggf. über ein integriertes Kundenprogramm konfigurierbar, bereitstellen.

Beispielsweise kann durch die Kamera, welche beispielsweise als IR-Kamera ausgebildet ist, die Lage der Sendespots der Detektionsstrahlen erkannt werden. Dadurch kann bei einem Systemtest des Sensorsystems durch die Kamera erkannt werden, ob beispielsweise eine Fehlstellung und/oder eine Fehlausrichtung, beispielsweise ein Schielen der Detektionsstrahlen vorliegt. Der Systemtest kann nach der Produktion des Sensorsystems oder auch zyklisch während des Betriebes des Sensorsystems automatisiert durchgeführt werden, wodurch eine Diagnose und ein Sicherheitstest des Sensorsystems ermöglicht wird.

In Weiterbildung der Erfindung weist das Kameramodul ein Weitwinkelobjektiv auf. Das Kameramodul ist an die Steuer- und Auswerteeinheit angeschlossen. Solche Kameramodule sind sehr kompakt und kostengünstig, da diese in hoher Stückzahl gefertigt werden.

Hierdurch kann eine Szene visuell aus Sicht des Sensorsystems betrachtet werden. Wird ein Kameramodul ohne IR-Sperrfilter verbaut, ist beispielsweise auch die Lage der Sendespots der einzelnen Sensormodule sichtbar. Alternativ kann ein Kameramodul mit RGB-IR Filterpattern verwendet werden, um Farb- und IR-Bild darzustellen. In Weiterbildung der Erfindung sind mehrere Leiterplatten vorgesehen, wobei die einzelnen Leiterplatten über flexible Leiterplatten oder Steckverbinder verbunden sind.

Die Steckverbinder verbinden mechanisch und elektronisch die einzelnen Leiterplatten.

Die flexiblen Leiterplatten verbinden ebenfalls mechanisch und elektronisch die einzelnen Leiterplatten. Die flexiblen Leiterplatten können dabei einstückig mit den starren Leiterplatten verbunden sein. Durch die Verwendung von flexiblen Leiterplatten können nahezu beliebige Konturen des Schutzfeldes erzeugt werden, indem sie an einer entsprechenden mechanischen Aufnahme fixiert werden. Weiter ist eine variable, d. h. eine veränderliche Ausrichtung der Distanzsensormodule möglich.

In Weiterbildung der Erfindung sind auf der Leiterplatte Beschleunigungs- und/oder Gyrosensoren angeordnet. Diese Sensoren sind ebenfalls kostengünstig verfügbar, da diese in hohen Stückzahlen gefertigt werden. Hierdurch kann die Lage des Sensorsystems im Raum erfasst werden. Dabei wird eine Kombinationen verschiedener Sensortechnologien auf einer Platine genutzt, um robuster gegenüber äußeren Einflüssen zu sein. Dabei werden beispielsweise diversitäre Sensortypen genutzt um robuster gegenüber äußeren Umgebungseinflüssen zu sein.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Figur 1: ein Sensorsystem mit optoelektronischen Distanzsensormodulen zur Überwachung eines Gefahrenbereichs mit einem räumlichen Schutzfeld;
- Figur 2: ein Sensorsystem mit einem kubischen oder quadratischen Schutzfeld;
- Figur 3: ein Sensorsystem mit einem rechteckförmigen Schutzfeld;
- Figur 4 und Figur 5: ein Sensorsystem mit einem pyramidenstumpfförmigen Schutzfeld;
- Figur 6 und Figur 7: ein Sensorsystem mit einem kegelstumpfförmigen Schutzfeld;
- Figur 8: ein Sensorsystem mit einem zylindrischen oder kreiszylindrischen Schutzfeld;
- Figur 9: ein Sensorsystem mit einer Leiterplatte;
- Figur 10: ein vergrößerter Ausschnitt der Leiterplatte mit Distanzsensormodulen;
- Figur 11: eine Leiterplatte mit flexiblen Leiterplattenabschnitten.

In den nachfolgenden Figuren sind identische Teile mit identischen Bezugszeichen versehen.

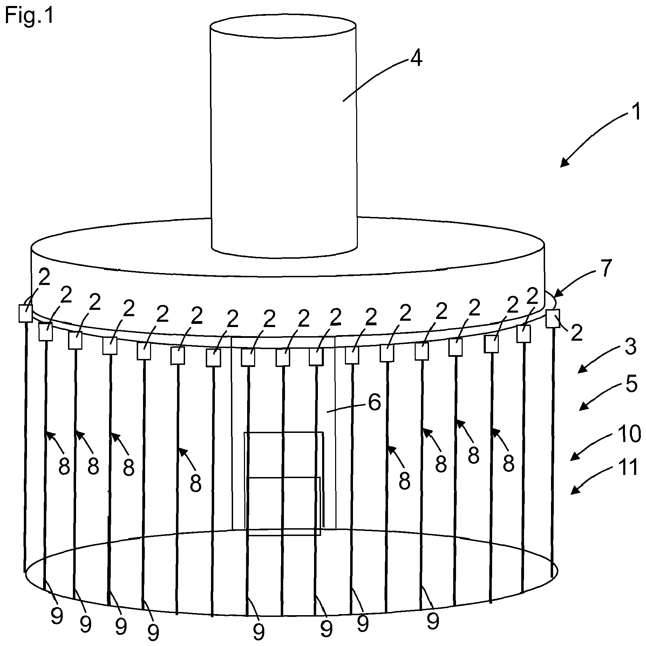

Figur 1 zeigt ein Sensorsystem 1 mit optoelektronischen Distanzsensormodulen 2 zur Überwachung eines Gefahrenbereichs 3 an einem bewegbaren Maschinenteil 4 mit mindestens einem Schutzbereich 5, wobei an dem bewegbaren Maschinenteil 4 ein Werkzeug 6 und/oder ein Werkstück angeordnet ist, wobei die optoelektronischen Distanzsensormodule 2 auf mindestens einer Leiterplatte 7 an dem bewegbaren Maschinenteil 4 angeordnet sind, wobei eine Vielzahl von Distanzsensormodulen 2 angeordnet ist, wobei die optischen Achsen 8 der Detektionsstrahlen 9 der Distanzsensormodule 2 ein räumliches Schutzfeld 10 bilden.

Das Sensorsystem 1 dient zum sicheren Überwachen des Gefahrenbereich 3 bzw. eines Überwachungsbereichs des bewegbaren Maschinenteils 4.

Die Distanzsensormodule 2 sind entlang der Leiterplatte 7 beabstandet zueinander angeordnet, wobei die Detektionsstrahlen 9 der Distanzsensormodule 2 ein flächiges und räumliches Schutzfeld 10 bilden.

Gemäß Figur 1 weisen die Distanzsensormodule 2 gleichmäßige Abstände auf der Leiterplatte 7 auf. Durch die gleichmäßigen Abstände der Distanzsensormodule 2 bzw. Sensoren und eine jeweils identische Winkelausrichtung der Detektionsstrahlen 9 wird eine gleichmäßige Auflösung innerhalb des Schutzfeldes 10 erreicht.

Beispielsweise sind die Distanzsensormodule 2 Lichtlaufzeitsensoren mit einem Lichtsender und einem Lichtempfänger.

Zur Erzeugung eines quasi geschlossenen Schutzmantels bzw. räumlichen Schutzfeldes 10 aus den Distanzsensormodulen 2 ist eine verschiedene Anzahl der Distanzsensormodule 2 vorgesehen: Es kann beispielsweise die Sensoranzahl angepasst werden an die Erfordernisse einer bestimmten Anwendung. Je mehr Distanzsensormodule 2 angeordnet werden, desto dichter liegen die optischen Achsen 8 der Distanzsensoren 2 nebeneinander, wodurch das Schutzfeld 10 eine höhere Auflösung aufweist.

Optional sind vor den Distanzsensormodulen 2 noch Vorsatzoptiken oder Optikmodule angeordnet. Jedoch können die Optikmodule auch in den Distanzsensormodulen 2 integriert sein.

Durch die hohe Anzahl an Distanzsensormodulen 2 kann eine entsprechend hohe räumliche Auflösung erreicht werden. Hierdurch können auch eine Vielzahl von Schutzfeldern 10 und eine Vielzahl von Schutzebenen angeordnet werden. Zudem werden Lücken oder Totbereiche zwischen den Distanzsensormodulen 2 klein gehalten.

In Weiterbildung der Erfindung bilden die optischen Achsen 8 der Detektionsstrahlen 9 der Distanzsensormodule 2 ein zylindrisches 11, insbesondere kreiszylindrisches oder ringzylindrisches Schutzfeld 10.

Gemäß Figur 1 können vor den Distanzsensormodulen 2 Vorsatzoptiken angeordnet sein. Die Vorsatzoptiken erlauben eine Strahlformung der Detektionsstrahlen 9 bzw. Detektionsbereiche hin zu Linien, Kegeln oder kollimierten Strahlen.

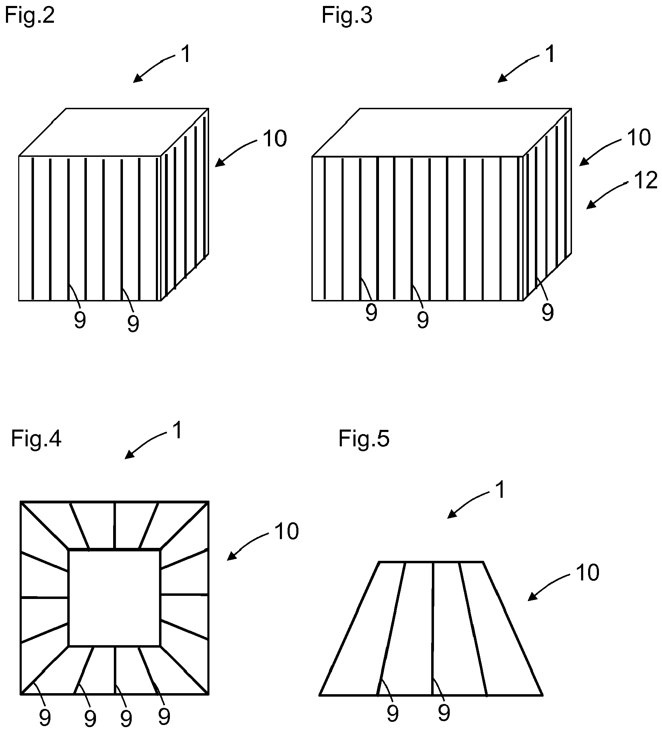

Figur 2 zeigt schematisch ein kubisches bzw. quadratisches Schutzfeld 10, wobei vier Seitenflächen des kubischen Schutzfeldes durch ebene Schutzfelder gebildet sind und einen Schutzfeldmantel bilden.

Figur 3 zeigt schematisch ein rechteckiges Schutzfeld 12, wobei vier Seitenflächen des rechteckigen Schutzfeldes 12 durch ebene Schutzfelder gebildet sind.

Gemäß Figur 4 und Figur 5 sind die Detektionsstrahlen 9 nach außen geneigt. Figur 4 zeigt schematisch ein pyramidenstumpfförmiges Schutzfeld in der Draufsicht von oben. Figur 5 zeigt das pyramidenstumpfförmige Schutzfeld gemäß Figur 4 in einer Seitenansicht.

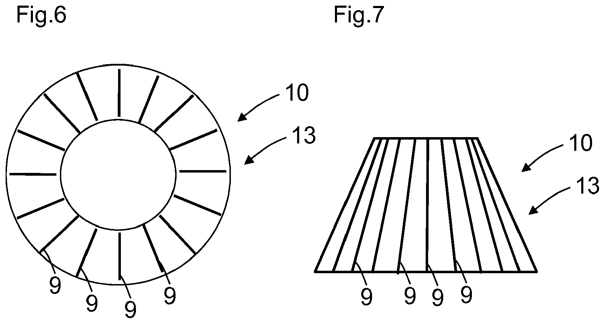

Gemäß Figur 6 und Figur 7 sind die Detektionsstrahlen 9 nach außen geneigt. Figur 6 zeigt schematisch ein kegelstumpfförmiges Schutzfeld 13 in der Draufsicht von oben. Figur 7 zeigt das kegelstumpfförmiges Schutzfeld 13 gemäß Figur 6 in einer Seitenansicht.

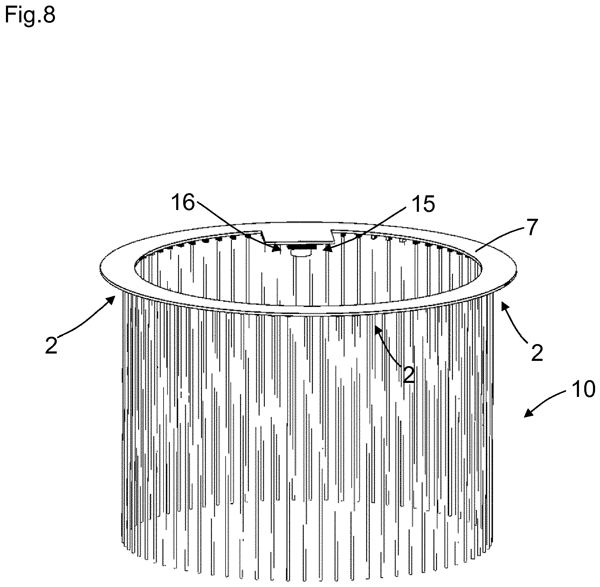

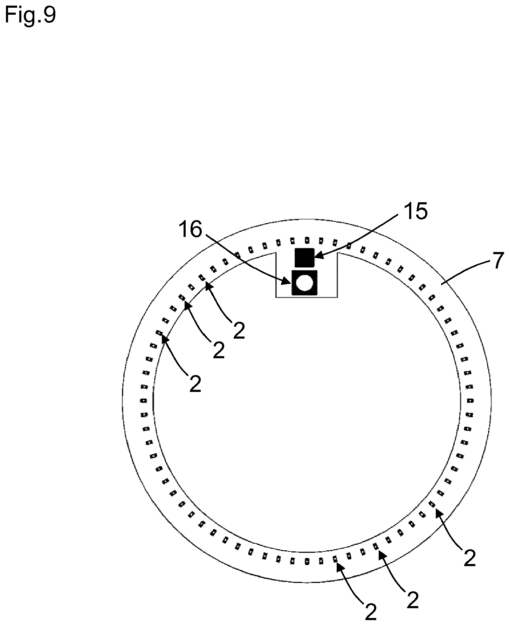

Gemäß Figur 8 und Figur 9 ist auf der Leiterplatte 7 die Steuer- und Auswerteeinheit 15 und ein Kameramodul 16 angeordnet. Die Leiterplatte 7 ist ringförmig oder kreisförmig ausgebildet und weist eine dichte Anordnung von Distanzsensormodulen 2 auf, die ein kreiszylindrisches bzw. hohlkreiszylindrisches Schutzfeld 10 bilden. Das Kameramodul 16 und die Steuer- und Auswerteeinheit 15 sind beispielhaft auf einem zungenförmigen Abschnitt der Leiterplatte 7 angeordnet.

Die Steuer- und Auswerteeinheit 15 ist beispielsweise einkanalig mit Testung, zweikanalig redundant oder zweikanalig diversitär aufgebaut. Das Sensorsystem 1 gemäß Figur 8 und 9 ist beispielsweise eigensicher ausgebildet und erkennt interne Fehler. Bei Entdeckung eines Fehlers wird beispielsweise ein Fehlersignal generiert. Weiter verfügt das Sensorsystem 1 optional über eine Sensortestung.

Die Steuer- und Auswerteeinheit 15 erkennt Schutzfeldverletzungen und kann ein sicherheitsgerichtetes Abschaltsignal ausgeben, um eine gefahrbringende Bewegung des Teils zu stoppen bzw. das Teil abzubremsen. Das kann z. B. über sichere Schaltsignale, z.B. OSSD-Signale (Output Safety Switching Device-Signale) oder sichere Distanzdaten, Abstandsdaten bzw. sichere Ortsdaten des Eingriffsereignisses realisiert werden.

Die mehreren Distanzsensormodule 2 sind mit der Steuer- und Auswerteeinheit 15 zur Auswertung der Distanzsensormodule 2 verbunden. An diese Steuer- und Auswerteeinheit 15 sind alle Distanzsensormodule 2 bzw. Sensorchips direkt auf der Platine bzw. Leiterplatte 7 angeschlossen und werden von dieser parametriert, angesteuert und ausgelesen.

Die Steuer- und Auswerteeinheit 15 ist wiederum über eine einzige Schnittstelle mit einer Robotersteuerung bzw. der übergeordneten Prozesssteuerung oder dem Netzwerk der Gesamtproduktion verbunden. Die Schnittstelle kann hierbei z. B. eine Feldbus- oder Funkverbindung sein. Im Falle einer Kabelverbindung kann hier ein hochflexibles Kabel verwendet werden, das sich besonders gut mit den beweglichen Gliedmaßen des Roboters kombiniert. Über diese Schnittstelle können schließlich alle Daten der angeschlossenen Sensoren auf der Platine abgerufen werden, sowie das Gesamtsystem mit dem Sensorsystem 1 von außen parametriert werden.

Die Steuer- und Auswerteeinheit 15 kann auch an die Positionsdaten der Robotersteuerung angebunden werden, um einen entsprechenden Abgleich mit den Positionsdaten durchzuführen.

Die Steuer- und Auswerteeinheit 15 kann zusätzliche Schnittstellen aufweisen, z. B. IO-Link, um weitere Sensoren zu Automatisierungszwecken in die Applikation einzubinden. Die Steuer- und Auswerteeinheit 15 dient hierbei auch als allgemeiner Sensorhub.

Das integrierte Kameramodul 16 kann auch einfachere Vision-Anwendungen als Automatisierungsfunktion, wie beispielsweise Teile finden oder Roboter Guidance ggf. über ein integriertes Kundenprogramm konfigurierbar, bereitstellen.

Gemäß Figur 8 und Figur 9 kann das Kameramodul 16 ein Weitwinkelobjektiv aufweisen.

Mit dem Kameramodul 16 kann eine Szene visuell aus Sicht des Sensorsystems 1 betrachtet werden. Wird ein Kameramodul 16 ohne IR-Sperrfilter verbaut, ist beispielsweise auch die Lage der Sendespots der einzelnen Sensormodule sichtbar. Alternativ kann ein Kameramodul 16 mit RGB-IR Filterpattern verwendet werden, um Farb- und IR-Bild darzustellen.

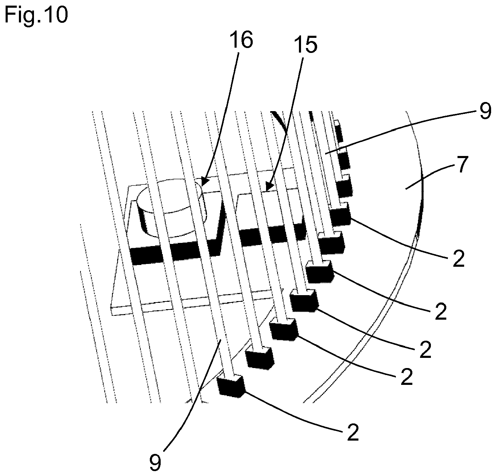

Figur 10 zeigt einen Ausschnitt aus Figur 9 mit der Steuer- und Auswerteeinheit 15 und des Kameramoduls 16.

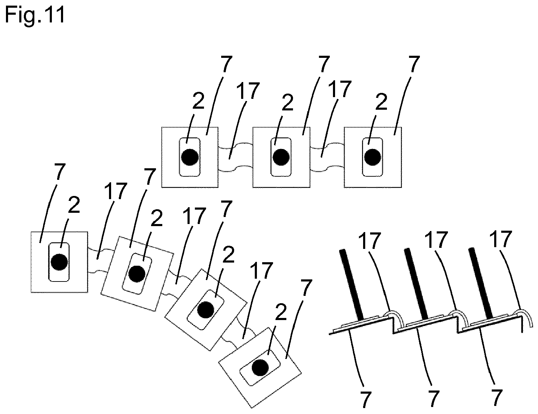

Gemäß Figur 11 sind mehrere Leiterplatten 7 vorgesehen, wobei die einzelnen Leiterplatten 7 über flexible Leiterplatten 17 oder Steckverbinder verbunden sind.

Die flexiblen Leiterplatten 17 verbinden mechanisch und elektronisch die einzelnen Leiterplatten 7. Die flexiblen Leiterplatten 17 können dabei einstückig mit den starren Leiterplatten 7 verbunden sein. Durch die Verwendung von flexiblen Leiterplatten 17 können nahezu beliebige Konturen des Schutzfeldes 10 erzeugt werden, indem sie an einer entsprechenden mechanischen Aufnahme fixiert werden. Weiter ist eine variable, d. h. eine veränderliche Ausrichtung der Distanzsensormodule 2 möglich.

Gemäß einer nicht dargestellten Ausführungsform sind auf der Leiterplatte Beschleunigungs- und/oder Gyrosensoren angeordnet. Hierdurch kann die Lage des Sensorsystems im Raum erfasst werden. Dabei wird eine Kombinationen verschiedener Sensortechnologien auf einer Platine genutzt, um robuster gegenüber äußeren Einflüssen zu sein.

### Bezugszeichen:

1 Sensorsystem
2 optoelektronische Distanzsensormodule
3 Gefahrenbereich
4 bewegbares Maschinenteil
5 Schutzbereich
6 Werkzeug
7 Leiterplatte
8 optische Achsen
9 Detektionsstrahlen
10 räumliches Schutzfeld
11 zylindrisches Schutzfeld
12 rechteckiges Schutzfeld
13 kegelstumpfförmiges Schutzfeld
15 Steuer- und Auswerteeinheit
16 Kameramodul
17 flexible Leiterplatten

## Patentansprüche

1. Sensorsystem (1) mit optoelektronischen Distanzsensormodulen (2) zur Überwachung eines Gefahrenbereichs (3) an einem bewegbaren Maschinenteil (4) mit mindestens einem Schutzbereich (5), wobei an dem bewegbaren Maschinenteil (4) ein Werkzeug (6) und/oder ein Werkstück angeordnet ist,
**dadurch gekennzeichnet, dass**
die optoelektronischen Distanzsensormodule (2) auf mindestens einer Leiterplatte (7) an dem bewegbaren Maschinenteil (4) angeordnet sind,
wobei eine Vielzahl von Distanzsensormodulen (2) angeordnet ist, wobei die optischen Achsen (8) der Detektionsstrahlen (9) der Distanzsensormodule (2) ein räumliches Schutzfeld (10) bilden.

2. Sensorsystem (1) mit optoelektronischen Distanzsensormodulen (2) nach Anspruch 1, **dadurch gekennzeichnet, dass** die optischen Achsen (8) der Detektionsstrahlen (9) der Distanzsensormodule (2) ein zylindrisches (11), ein kubisches, ein rechteckiges (12), ein kegelstumpfförmiges (13) oder ein pyramidenstumpfförmiges Schutzfeld (10) bilden.

3. Sensorsystem (1) mit optoelektronischen Distanzsensormodulen (2) nach mindestens einem der vorhergenannten Ansprüche, **dadurch gekennzeichnet, dass** vor den Distanzsensormodulen (2) Vorsatzoptiken angeordnet sind.

4. Sensorsystem (1) mit optoelektronischen Distanzsensormodulen (2) nach mindestens einem der vorhergenannten Ansprüche, **dadurch gekennzeichnet, dass** auf der Leiterplatte (7) eine Auswerteeinheit angeordnet ist.

5. Sensorsystem (1) mit optoelektronischen Distanzsensormodulen (2) nach mindestens einem der vorhergenannten Ansprüche, **dadurch gekennzeichnet, dass** auf der Leiterplatte (7) ein Kameramodul (16) angeordnet ist.

6. Sensorsystem (1) mit optoelektronischen Distanzsensormodulen (2) nach mindestens einem der vorhergenannten Ansprüche, **dadurch gekennzeichnet, dass** das Kameramodul (16) ein Weitwinkelobjektiv aufweist.

7. Sensorsystem (1) mit optoelektronischen Distanzsensormodulen (2) nach mindestens einem der vorhergenannten Ansprüche, **dadurch gekennzeichnet, dass** mehrere Leiterplatten (7) vorgesehen sind, wobei die einzelnen Leiterplatten (7) über flexible Leiterplatten (17) verbunden sind.

8. Sensorsystem (1) mit optoelektronischen Distanzsensormodulen (2) nach mindestens einem der vorhergenannten Ansprüche, **dadurch gekennzeichnet, dass** auf der Leiterplatte (7) Beschleunigungssensoren und/oder Gyrosensoren angeordnet sind.
